(19) Europäisches Patentamt
European Patent Office
Office européen des brevets

(11) **EP 4 077 909 B1**

(12) **EUROPEAN PATENT SPECIFICATION**

(45) Date of publication and mention
of the grant of the patent:
**08.01.2025 Bulletin 2025/02**

(21) Application number: **20902183.1**

(22) Date of filing: **14.12.2020**

(51) International Patent Classification (IPC):
***F03B 13/06*** (2006.01)    ***F03B 3/10*** (2006.01)

(52) Cooperative Patent Classification (CPC):
**F03B 13/06;** Y02E 10/20; Y02E 60/16

(86) International application number:
**PCT/NO2020/050313**

(87) International publication number:
**WO 2021/125969 (24.06.2021 Gazette 2021/25)**

(54) **ENERGY PRODUCTION AND STORAGE SYSTEM AND METHOD**

ENERGIEPRODUKTIONS- UND SPEICHERSYSTEM UND VERFAHREN

SYSTÈME ET PROCÉDÉ DE PRODUCTION ET DE STOCKAGE D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2019 NO 20191481**

(43) Date of publication of application:
**26.10.2022 Bulletin 2022/43**

(73) Proprietor: **Gudesen, Hans Gude
1639 Gamle Fredrikstad (NO)**

(72) Inventor: **Gudesen, Hans Gude
1639 Gamle Fredrikstad (NO)**

(74) Representative: **Acapo AS
Edvard Griegs vei 1
5059 Bergen (NO)**

(56) References cited:
**EP-A1- 2 538 072        WO-A1-01/96736
WO-A1-2019/182458    WO-A2-2012/167783
JP-A- S63 253 123      US-A- 5 389 821
US-A1- 2014 013 744**

## Description

### Field of the invention

The present invention relates to a system and a method for generating and storing hydroelectric energy.

### Background of the invention.

The concept of underground pumped hydro energy storage (UPHS) is known in the Prior Art, see for example US 5 389 821 A. It is conceptually similar to aboveground pumped hydropower where energy is stored by pumping water from a low-lying reservoir to a water reservoir at a higher elevation. When energy is needed, the water is returned to a turbine/generator combination at a lower level and dropped into the lower reservoir.

In underground pumped hydropower plants, the upper reservoir does not need to be located at high level aboveground, since water is delivered to the turbine at a level below the ground and collected in an underground cavity. This increases vastly the number of locations where pumped hydropower can be used, which is of particular interest in flat land regions and when operated in concert with renewable energy sources such as wind and sun. It also enables local communities to form electrical microgrid networks with increased autonomy and optimized energy trading solutions. A requirement for this is that the amount of water that can be stored in the upper and lower reservoirs is large enough. Depending on the elevation difference between the upper and the lower reservoirs, an energy storage capacity in the range 100 MWh-1 GWh shall imply a required water storage volume in the upper level reservoir to be $10^4$ - $10^6$ m$^3$, corresponding to a pond or reservoir of surface area $10^3$ - $10^5$ m$^2$ at a water depth 10 m. The presence of such a body of water represents a problem in many cases, e.g in local communities with high population density, where microgrid storage appears especially attractive but where space is limited and concerns may be raised about safety and visual impact.

### Objects of the present invention.

Accordingly, it is a major objective of the present invention to introduce novel concepts and techniques for underground pumped hydroelectric energy storage systems with the following characteristics:

- Any negative environmental impact shall be negligible
- The systems shall provide useful areas for local communities.
- The above ground parts of the systems shall not represent a hazard for health or safety of people living nearby.

### Means for solving the problems.

The objective is achieved according to the invention by a system and a method according to independent claims. A number of non-exhaustive embodiments, variants or alternatives of the invention are defined by the dependent claims.

### Summary of the invention

A first aspect of the invention is a hydroelectric energy production and storage system comprising an upper reservoir located in a depression or cavity in the ground, a lower reservoir comprising at least one cavity located underground at a lower altitude than the upper reservoir, a shaft extending from a low point of the upper reservoir to the lower reservoir for providing hydraulic connection between the upper and lower reservoir, energy production means comprising a turbine and generator unit arranged to be driven by water in the shaft, and energy storage means comprising pumping means arranged for pumping water from the lower reservoir to the upper reservoir. The system further comprises objects arranged in the depression or cavity forming an aggregate which fills the depression or cavity and comprises hydraulically communicating void volumes between the objects.

Optionally, the energy storage means comprise the turbine and generator unit run in reverse, or a separate pump.

Optionally, the depression or cavity is at least partially a landscape feature of natural origin. Further optionally, the depression or cavity is one of the following: A gully, valley, trench, pond or lake. Even further, the depression or cavity can be at least partially created by excavation or mining.

Optionally, the depression or cavity is one of the following: An open pit mine, tunnel opening, water reservoir, well, trench.

Optionally, the objects are made from incompressible materials. The objects can be of one or more of the following types: Rocks, gravel, sand. Further, the objects can be manufactured by molding, cutting, extrusion or crushing. Optionally, the objects are shaped as one or more of the following: Spheres, rods, pipes, symmetric or asymmetric polyhedra.

Optionally, the aggregate is arranged to present a defined upper surface. The upper surface can be covered by a membrane., and the membrane can be impermeable to gas or water or both. Optionally, the membrane is arranged and configured to collect gas transmitted to or from the aggregate of objects and guide it through a venting chimney to the ambient air.

Optionally, the aggregate contributes to constituting a landfill. The landfill can be providing real estate for one or more of the following: Buildings, industry, agriculture, gardens, leisure activities.

A further aspect of the invention is a method for building and operating a hydroelectric energy production and storage system as described above, comprising the steps of:

- selecting, excavating or mining the depression or cavity;
- excavating or mining a shaft extending into the ground from a low point of the depression or cavity;
- excavating or mining at depth a cavity underground which communicates with the shaft;
- positioning an electromechanical system comprising a turbine and generator unit at the bottom of the shaft, and connecting hydraulically the turbine to the top of the shaft;
- providing a means for pumping water from the cavity underground to the level of the depression or cavity;
- filling in partly or completely the depression or cavity with objects;
- filling the system with a volume of water corresponding at a minimum to the volume of the underground cavity;
- storing electrical energy by pumping water from the underground cavity to the void volume within the aggregate of objects; and
- producing electrical energy by allowing water from the void volume within the aggregate of objects to flow down the shaft, to pass through the turbine and generator unit and to collect in the underground cavity.

Optionally, the objects arranged in the depression or cavity are at least in part rocks and gravel from the excavation or mining performed to create the system.

**Description of the diagrams**

Embodiments of the present invention will now be described, by way of example only, with reference to the following diagrams wherein:
**Fig.1** shows a generic underground pumped hydro energy storage system (UPHS) according to prior art:

> **Fig.2** discloses a generic version of the energy production and storage system according to the present invention.
> **Fig.3** shows an example of how the land surface area occupied by the upper reservoir has been reclaimed according to the present invention.

**List of reference numbers in the figures**

The following reference numbers refer to the drawings:

| Number | Designation |
| --- | --- |
| 1 | Upper reservoir |
| 2 | Shaft |
| 3 | Turbine/generator unit |
| 4 | Lower reservoir |
| 5 | Air shaft |
| 6 | Depression |
| 7 | Fill material |
| 8 | Void volume |
| 9 | Membrane |
| 10 | Venting chimney |

**Description of preferred embodiments of the invention**

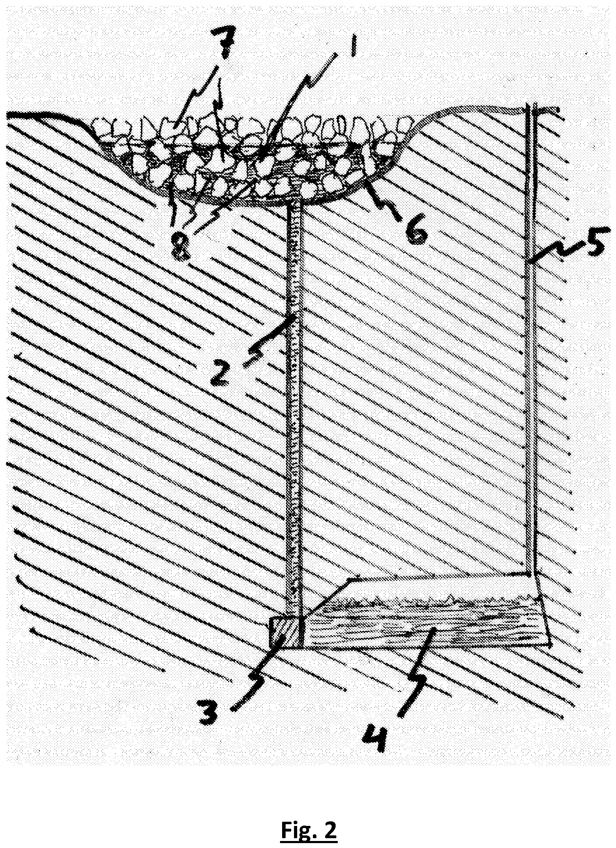

The following description of the exemplary embodiments refers to the accompanying drawings. The same reference numbers in different drawings identify the same or similar elements. The following detailed description does not limit the invention. Instead, the scope of the invention is defined by the appended claims. Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further particular features, structures or characteristics may be combined in any suitable manner or in one or more embodiments.

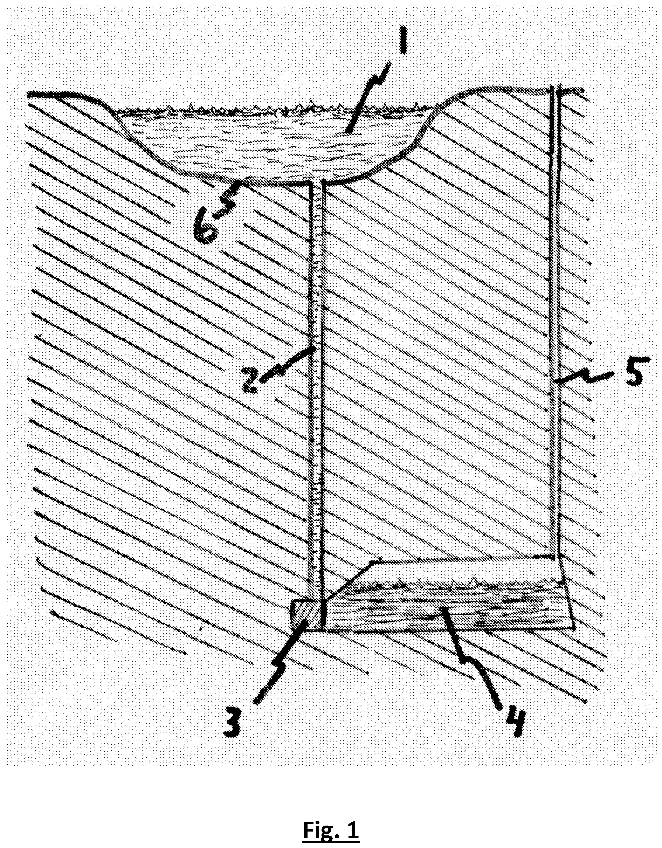

**Fig.1** shows an underground pumped hydro energy storage system (UPHS) according to prior art: Water is stored in an upper reservoir (**1**), which is shown in **Fig.1** in a depression (**6**) at or near the ground level. A shaft (**2**) extends into the ground from a low point of the upper reservoir (**1**). In periods when the UPHS delivers electricity (**discharge cycle)** water from the upper reservoir flows down the shaft (**2**) and drives a turbine/generator unit (**3**) located at the bottom of the shaft. Water from the turbine is collected by a lower reservoir (**4**) located at depth underground. In periods when the UPHS stores energy (**charge cycle),** the UPHS system receives electrical energy and pumps water from the lower to the upper reservoir. This may be achieved by different technical means; e.g. by running the turbine/generator unit (**3**) in reverse with the turbine now acting as a pump. An air shaft (**5**) connects the lower reservoir to ambient air, to avoid air pressure build-up in the lower reservoir when it fills with water.
The basic concept for the energy storage system according to the present invention is illustrated in **Fig.2:** The system is similar to that shown in the prior art illustration **Fig.1,** but now the upper reservoir (**1**) comprises a depression near or at the ground surface which is filled with fill material (**7**) shown as loose rocks or gravel here. In this case the volume available for storing water is the void volume (**8**) between the individual rock- or gravel particles which are packed in such a way that water can flow easily between them. The depression shown in **Fig.2** may be a natural feature (lake, pond, gully, valley). Alternatively, it may be excavated for this particular application, or it may be a feature of anthropogenic origin which no longer serves its original purpose. Examples of the latter are abandoned open pit mines and mine shafts, which often represent a negative impact on the local environment. Depending on local conditions, water in the upper reservoir may be prevented from leaking into the ground by natural rock surfaces on the bottom, or a membrane is positioned covering the bottom of the reservoir.

The arrangement shown in **Fig.2** provides some distinct advantages over prior art systems:

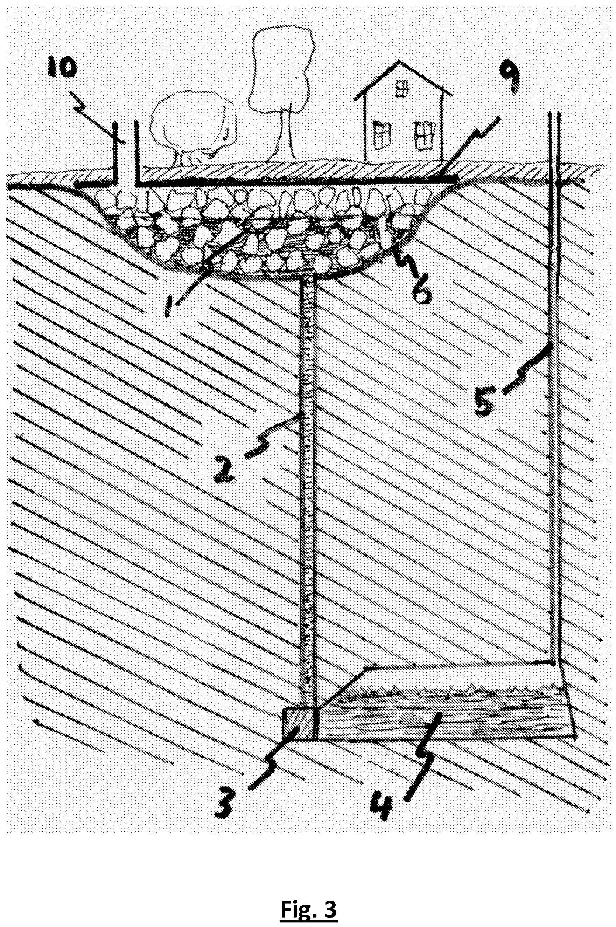

- It allows the area occupied by the upper reservoir to be used for other purposes in addition to holding water. **Fig.3** shows an example of how the land surface area occupied by the upper reservoir has been reclaimed: A fill material, e.g. rocks and gravel, fills the depression to the top, which is covered by a membrane (**9**). The membrane prevents transport of material from the surface which could clog up and contaminate the fill material in the upper reservoir (**1**) and other parts of the energy storage system. During charging and discharging of the energy storage system, water rises and falls in the upper reservoir (**1**), forcing air to vent to the atmosphere through the fill material. The membrane guides this air to a venting chimney (**10**) as shown. Thus, valuable real estate can be created on land which may otherwise be considered worthless and even environmentally problematic.

- During excavation of the shaft (**2**) and the lower reservoir (**4**) a great amount of rocks and gravel are brought to the surface. As an example, depending on depth and configuration, a system capable of storing 100 MWh energy shall require subterranean cavity volumes in the range $10^4$ -$10^6$ m$^3$. Typically, this shall yield twice this volume in excavated rocks and gravel, which in many cases shall have to be transported elsewhere, representing a significant logistical and cost problem. By employing the excavated rocks and gravel to fill in the upper reservoir as taught in the present invention, all the excavated material is put to use at the site, without incurring the cost of transport to remote locations.

Assuming that the volumes of water that need to be stored in the upper and lower reservoirs are roughly equal, the minimum volume of rock and gravel that must be accommodated in the depression holding the upper reservoir shall correspond to that of the lower reservoir, plus an added volume which depends on the void space available to hold water between the individual rocks and gravel particles: If rock and gravel particles constitute a volumetric fraction $\eta$ of the total rock and gravel volume $V_{total}$, the available void volume for storing water $V_{void}$ interstitially is

Eq.1 $$V_{void} = (1-\eta) V_{total} .$$

Thus, for $\eta = 0.5$, the void space is half the volume occupied by the rocks and gravel, and the minimum volume required for storage in the depression holding the rocks and gravel shall be roughly twice that of the lower reservoir.

The value of $\eta$ depends on many factors, including the shape and size distribution of the rock and gravel particles, how they are packed, and the presence of earth, clay, sand and organic matter. As a general rule, the rock and gravel particles should be uniform, hard and clean (i.e. free from small particle fractions such as dust and sediments). Solid granite has a density of 2.69 tons/m$^3$, which is reduced to 1.4 - 1.7 tons/m$^3$ when in crushed or gravel form, corresponding to a volumetric void fraction $(1- \eta) = 0.36 - 0.48$.

As shall be clear to a person skilled in the art, the basic principle taught in the present invention may allow any type of fill material that provides communicating internal voids and does not compress too easily. Thus, fill material can include objects of nearly any shape packed in organized or random fashion, either of natural origin (e.g. rocks, gravel) or manmade (e.g. spheres).

**Claims**

1. A hydroelectric energy production and storage system comprising:

   - an upper reservoir (1) located in a depression (6) or cavity in the ground;
   - a lower reservoir (4) comprising at least one cavity located underground at a lower altitude than the upper reservoir;
   - a shaft (2) extending from a low point of the upper reservoir to the lower reservoir for providing hydraulic connection between the upper and lower reservoir;
   - energy production means comprising a turbine and generator unit (3) arranged to be driven by water in the shaft,
   - energy storage means comprising pumping means arranged for pumping water from the lower reservoir to the upper reservoir, **characterized in that**
   - the system comprises objects (7) arranged in the depression or cavity forming an aggregate which fills the depression or cavity and comprises hydraulically communicating void volumes (8) between the objects

2. Hydroelectric energy production and storage system according to claim 1, where the energy storage means comprise the turbine and generator unit run in reverse, or a separate pump.

3. Hydroelectric energy production and storage system according to claim 1 and 2, where the depression or cavity is at least partially a landscape feature of natural origin.

4. Hydroelectric energy production and storage system according to claim 3, where the depression or cavity is one of the following: A gully, valley, trench, pond or lake.

5. Hydroelectric energy production and storage system according to claim 3, where the depression or cavity is at least partially created by excavation or mining.

6. Hydroelectric energy production and storage system according to claim 5, where the depression or cavity is one of the following: An open pit mine, tunnel opening, water reservoir, well, trench.

7. Hydroelectric energy production and storage system according to one of the claims above, where the objects are made from incompressible materials.

8. Hydroelectric energy production and storage system according to one of the claims above, where the objects are of one or more of the following types: Rocks, gravel, sand.

9. Hydroelectric energy production and storage system according to one of the claims above, where the objects are manufactured by molding, cutting, extrusion or crushing.

10. Hydroelectric energy production and storage system according to claim 9, where the objects are shaped as one or more of the following: Spheres, rods, pipes, symmetric or asymmetric polyhedra.

11. Hydroelectric energy production and storage system according to one of the claims above, where the aggregate is arranged to present a defined upper surface.

12. Hydroelectric energy production and storage system according to claim 11, where the upper surface is covered by a membrane (9).

13. Hydroelectric energy production and storage system according to claim 12, where the membrane is impermeable to gas or water or both.

14. Hydroelectric energy production and storage system according to claim 12, where the membrane is arranged and configured to collect gas transmitted to or from the aggregate of objects and guide it through a venting chimney (10) to the ambient air

15. Hydroelectric energy production and storage system according to one of the claims above, where the aggregate contributes to constituting a landfill.

16. Hydroelectric energy production and storage system according to claim 15, where the landfill is providing real estate for one or more of the following: Buildings, industry, agriculture, gardens, leisure activities.

17. Method for building and operating a hydroelectric energy production and storage system according to one of the claims above, comprising the steps of:

   - selecting, excavating or mining the depression or cavity;
   - excavating or mining a shaft extending into the ground from a low point of the depression or cavity;
   - excavating or mining at depth a cavity underground which communicates with the shaft;
   - positioning an electromechanical system comprising a turbine and generator unit at the bottom of the shaft, and connecting hydraulically the turbine to the top of the shaft;
   - providing a means for pumping water from the cavity underground to the level of the depression or cavity;
   - filling in partly or completely the depression or cavity with objects;
   - filling the system with a volume of water corresponding at a minimum to the volume of the underground cavity;
   - storing electrical energy by pumping water from the underground cavity to the void volume within the aggregate of objects; and
   - producing electrical energy by allowing water from the void volume within the aggregate of objects to flow down the shaft, to pass through the turbine and generator unit and to collect in the underground cavity.

18. Method for building and operating a hydroelectric energy production and storage system according to claim 17, where the objects arranged in the depression or cavity are at least in part rocks and gravel from the excavation or mining performed to create the system.


**Patentansprüche**

1. Hydroelektrisches Energieproduktions- und Speichersystem, umfassend:

   - einen oberen Behälter (1), der sich in einer Vertiefung (6) oder einem Hohlraum im Boden befindet;
   - einen unteren Behälter (4), umfassend mindestens einen Hohlraum, der sich unterirdisch auf einer niedrigeren Höhe als der obere Behälter befindet;

- einen Schacht (2), der sich von einem niedrigen Punkt des oberen Behälters zu dem unteren Behälter erstreckt, um eine hydraulische Verbindung zwischen dem oberen und dem unteren Behälter bereitzustellen;

- Energieproduktionsmittel, umfassend eine Turbinen- und Generatoreinheit (3), die angeordnet ist, um durch Wasser im Schacht angetrieben zu werden,

- Energiespeichermittel, umfassend Pumpmittel, die angeordnet sind, um Wasser von dem unteren Behälter zu dem oberen Behälter zu pumpen,

***dadurch gekennzeichnet, dass***

- das System Objekte (7) umfasst, die in der Vertiefung oder dem Hohlraum angeordnet sind und ein Aggregat bilden, das die Vertiefung oder den Hohlraum füllt und hydraulisch kommunizierende Hohlraumvolumina (8) zwischen den Objekten umfasst.

2. Hydroelektrisches Energieproduktions- und Speichersystem nach Anspruch 1, wobei die Energiespeichermittel die Turbinen- und Generatoreinheit im Betrieb in umgekehrter Richtung oder eine separate Pumpe umfassen.

3. Hydroelektrisches Energieproduktions- und Speichersystem nach Anspruch 1 und 2, wobei die Vertiefung oder der Hohlraum zumindest teilweise ein Landschaftsmerkmal natürlichen Ursprungs ist.

4. Hydroelektrisches Energieproduktions- und Speichersystem nach Anspruch 3, wobei die Vertiefung oder der Hohlraum eines von Folgendem ist: eine Rinne, ein Tal, ein Graben, ein Teich oder ein See.

5. Hydroelektrisches Energieproduktions- und Speichersystem nach Anspruch 3, wobei die Vertiefung oder der Hohlraum zumindest teilweise durch Aushub oder Bergbau entstanden ist.

6. Hydroelektrisches Energieproduktions- und Speichersystem nach Anspruch 5, wobei die Vertiefung oder der Hohlraum eines von Folgendem ist: ein Tagebau, eine Tunnelöffnung, ein Wasserspeicher, ein Brunnen, ein Graben.

7. Hydroelektrisches Energieproduktions- und Speichersystem nach einem der vorstehenden Ansprüche, wobei die Objekte aus inkompressiblen Materialien hergestellt sind.

8. Hydroelektrisches Energieproduktions- und Speichersystem nach einem der vorstehenden Ansprüche, wobei die Objekte aus einem oder mehreren der folgenden Typen sind: Gestein, Kies, Sand.

9. Hydroelektrisches Energieproduktions- und Speichersystem nach einem der vorstehenden Ansprüche, wobei die Objekte durch Formen, Schneiden, Extrudieren oder Zerkleinern hergestellt sind.

10. Hydroelektrisches Energieproduktions- und Speichersystem nach Anspruch 9, wobei die Objekte eine oder mehrere der folgenden Formen aufweisen: Kugeln, Stäbe, Rohre, symmetrische oder asymmetrische Polyeder.

11. Hydroelektrisches Energieproduktions- und Speichersystem nach einem der vorstehenden Ansprüche, wobei das Aggregat angeordnet ist, um eine definierte obere Oberfläche zu präsentieren.

12. Hydroelektrisches Energieproduktions- und Speichersystem nach Anspruch 11, wobei die obere Oberfläche von einer Membran (9) bedeckt ist.

13. Hydroelektrisches Energieproduktions- und Speichersystem nach Anspruch 12, wobei die Membran für Gas oder Wasser oder beides undurchlässig ist.

14. Hydroelektrisches Energieproduktions- und Speichersystem nach Anspruch 12, wobei die Membran angeordnet und dazu konfiguriert ist, Gas zu sammeln, das zu oder von dem Aggregat von Objekten übertragen wird, und es durch einen Entlüftungskamin (10) an die Umgebungsluft zu leiten.

15. Hydroelektrisches Energieproduktions- und Speichersystem nach einem der vorstehenden Ansprüche, wobei das Aggregat zur Bildung einer Deponie beiträgt.

16. Hydroelektrisches Energieproduktions- und Speichersystem nach Anspruch 15, wobei die Deponie Grundstück für eines oder mehrere von Folgendem bereitstellt: Gebäude, Industrie, Landwirtschaft, Gärten, Freizeitaktivitäten.

17. Verfahren zum Bauen und Betreiben eines hydroelektrischen Energieproduktions- und Speichersystems nach einem der vorstehenden Ansprüche, umfassend die folgenden Schritte:

- Auswählen, Ausheben oder Abbauen der Vertiefung oder des Hohlraums;
- Ausheben oder Abbauen eines Schachts, der sich von einem niedrigen Punkt der Vertiefung oder des Hohlraums in den Boden erstreckt;
- Ausheben oder Abbauen in der Tiefe eines unterirdischen Hohlraums, der mit dem Schacht in Verbindung steht;
- Positionieren eines elektromechanischen Systems, umfassend eine Turbinen- und Generatoreinheit am Boden des Schachts und hydraulisches Verbinden der Turbine mit dem oberen Ende des Schachts;
- Bereitstellen eines Mittels zum Pumpen von Wasser aus dem unterirdischen Hohlraum auf das Niveau der Vertiefung oder des Hohlraums;
- teilweises oder vollständiges Auffüllen der Vertiefung oder des Hohlraums mit Objekten;
- Füllen des Systems mit einem Wasservolumen, das mindestens dem Volumen des unterirdischen Hohlraums entspricht;
- Speichern elektrischer Energie durch Pumpen von Wasser aus dem unterirdischen Hohlraum in das Hohlraumvolumen innerhalb des Aggregats von Objekten; und
- Erzeugen elektrischer Energie, indem zugelassen wird, dass Wasser aus dem Hohlraumvolumen innerhalb des Aggregats von Objekten durch den Schacht nach unten fließt, durch die Turbinen- und Generatoreinheit geleitet wird und sich in dem unterirdischen Hohlraum sammelt.

18. Verfahren zum Bauen und Betreiben eines hydroelektrischen Energieproduktions- und Speichersystems nach Anspruch 17, wobei die in der Vertiefung oder dem Hohlraum angeordneten Objekte zumindest teilweise aus Gestein und Kies aus dem Aushub oder dem Bergbau bestehen, der zum Erstellen des Systems durchgeführt wurde.

**Revendications**

1. Système de production et de stockage d'énergie hydroélectrique comprenant :

   - un réservoir supérieur (1) situé dans une dépression (6) ou une cavité dans le sol ;
   - un réservoir inférieur (4) comprenant au moins une cavité située sous terre à une altitude inférieure à celle du réservoir supérieur ;
   - un puits (2) s'étendant d'un point bas du réservoir supérieur au réservoir inférieur pour assurer la liaison hydraulique entre le réservoir supérieur et le réservoir inférieur ;
   - des moyens de production d'énergie comprenant une unité turbine et génératrice (3) agencée pour être entraînée par de l'eau dans le puits,
   - des moyens de stockage d'énergie comprenant des moyens de pompage agencés pour pomper l'eau du réservoir inférieur au réservoir supérieur,

*caractérisé en ce que*

   - le système comprend des objets (7) agencés dans la dépression ou la cavité formant un agrégat qui remplit la dépression ou la cavité et comprend des volumes vides (8) communiquant hydrauliquement entre les objets.

2. Système de production et de stockage d'énergie hydroélectrique selon la revendication 1, dans lequel les moyens de stockage d'énergie comprennent l'unité turbine et génératrice fonctionnant en sens inverse, ou une pompe séparée.

3. Système de production et de stockage d'énergie hydroélectrique selon les revendications 1 et 2, dans lequel la dépression ou la cavité est au moins partiellement un élément paysager d'origine naturelle.

4. Système de production et de stockage d'énergie hydroélectrique selon la revendication 3, dans lequel la dépression ou la cavité est l'une des suivantes : un ravin, une vallée, une tranchée, un étang ou un lac.

5. Système de production et de stockage d'énergie hydroélectrique selon la revendication 3, dans lequel la dépression ou la cavité est au moins partiellement créée par excavation ou creusage.

6. Système de production et de stockage d'énergie hydroélectrique selon la revendication 5, dans lequel la dépression ou la cavité est l'une des suivantes : une mine à ciel ouvert, une ouverture de tunnel, un réservoir d'eau, un puits, une tranchée.

7. Système de production et de stockage d'énergie hydroélectrique selon l'une des revendications ci-dessus, dans lequel les objets sont en matériaux incompressibles.

8. Système de production et de stockage d'énergie hydroélectrique selon l'une des revendications ci-dessus, dans lequel les objets sont d'un ou plusieurs des types suivants : roches, gravier, sable.

9. Système de production et de stockage d'énergie hydroélectrique selon l'une des revendications ci-dessus, dans lequel les objets sont fabriqués par moulage, découpe, extrusion ou concassage.

10. Système de production et de stockage d'énergie hydroélectrique selon la revendication 9, dans lequel les objets sont conçus sous une ou plusieurs des formes suivantes : sphères, tiges, tuyaux, polyèdres symétriques ou asymétriques.

11. Système de production et de stockage d'énergie hydroélectrique selon l'une des revendications ci-dessus, dans lequel l'agrégat est agencé pour présenter une surface supérieure définie.

**12.** Système de production et de stockage d'énergie hydroélectrique selon la revendication 11, dans lequel la surface supérieure est recouverte d'une membrane (9).

**13.** Système de production et de stockage d'énergie hydroélectrique selon la revendication 12, dans lequel la membrane est imperméable au gaz ou à l'eau ou aux deux.

**14.** Système de production et de stockage d'énergie hydroélectrique selon la revendication 12, dans lequel la membrane est agencée et configurée pour collecter le gaz transmis vers ou depuis l'agrégat d'objets et le guider à travers une cheminée de ventilation (10) vers l'air ambiant.

**15.** Système de production et de stockage d'énergie hydroélectrique selon l'une des revendications ci-dessus, dans lequel l'agrégat contribue à constituer un site d'enfouissement.

**16.** Système de production et de stockage d'énergie hydroélectrique selon la revendication 15, dans lequel le site d'enfouissement offre de la place pour un ou plusieurs des éléments suivants : bâtiments, industrie, agriculture, jardins, loisirs.

**17.** Procédé de construction et d'exploitation d'un système de production et de stockage d'énergie hydroélectrique selon l'une des revendications ci-dessus, comprenant les étapes de :

> - sélection, excavation ou creusage de la dépression ou la cavité ;
> - excavation ou creusage d'un puits s'étendant dans le sol à partir d'un point bas de la dépression ou de la cavité ;
> - excavation ou creusage en profondeur d'une cavité souterraine qui communique avec le puits ;
> - positionnement d'un système électromécanique comprenant une unité turbine et génératrice au fond du puits, et reliant hydrauliquement la turbine au sommet du puits ;
> - fourniture d'un moyen pour pomper l'eau de la cavité souterraine au niveau de la dépression ou de la cavité ;
> - remplissage partiel ou total de la dépression ou de la cavité avec des objets ;
> - remplissage du système avec un volume d'eau correspondant au minimum au volume de la cavité souterraine ;
> - stockage de l'énergie électrique en pompant l'eau de la cavité souterraine vers le volume vide dans l'agrégat d'objets ; et
- production de l'énergie électrique en permettant à l'eau du volume vide à l'intérieur de l'agrégat d'objets de couler dans le puits, de passer à travers l'unité turbine et génératrice et de s'accumuler dans la cavité souterraine.

**18.** Procédé de construction et d'exploitation d'un système de production et de stockage d'énergie hydroélectrique selon la revendication 17, dans lequel les objets agencés dans la dépression ou la cavité sont au moins en partie des roches et du gravier provenant de l'excavation ou du creusage effectué pour créer le système.

**Fig. 1**

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5389821 A